# EUROPÄISCHE PATENTSCHRIFT

(11) **EP 3 349 965 B1**
(45) Veröffentlichungstag und Bekanntmachung des Hinweises auf die Patenterteilung: **23.02.2022**
(21) Anmeldenummer: 16778226.7
(22) Anmeldetag: 19.09.2016
(51) Int. Cl.: B29C 71/00, B33Y 40/00, B29C 64/35, B29C 64/40

(54) **VERFAHREN ZUR OBERFLÄCHENBEHANDLUNG EINES FORMTEILS**
METHOD FOR TREATING THE SURFACE OF A MOULDED PART
PROCÉDÉ POUR LE TRAITEMENT DE SURFACE D'UNE PIÈCE MOULÉE

(30) Priorität: 18.09.2015 DE 102015115821
(43) Veröffentlichungstag der Anmeldung: 25.07.2018
(73) Patentinhaber: DyeMansion GmbH, 82152 Planegg (DE)
(72) Erfinder: NEININGER, Markus, 81375 München (DE); EWALD, Felix, 81375 München (DE); KRAMER, Philipp, 81243 München (DE)
(74) Vertreter: 2s-ip Schramm Schneider Bertagnoll Patent- und Rechtsanwälte Part mbB
(86) Internationale Anmeldenummer: PCT/EP2016/072157
(87) Internationale Veröffentlichungsnummer: WO 2017/046418

(56) Entgegenhaltungen:
- US-A- 5 216 616
- US-A1- 2012 018 115
- US-A1- 2012 018 926
- US-A1- 2013 075 957
- US-A1- 2014 300 017

## Beschreibung

### Gebiet der Erfindung

Die Erfindung betrifft ein Verfahren zum Herstellen und zur Oberflächenbehandlung eines Formteils, welches in einem 3D-Druckverfahren, insbesondere in einem pulverbasierten Fertigungs- bzw. Druckverfahren hergestellt wird.

### Stand der Technik

Es ist bekannt, Formteile in einem 3D-Druckverfahren herzustellen. Unter 3D-Druckverfahren werden rein additive Fertigungsverfahren verstanden. Die Oberflächen von in einem 3D-Druckverfahren hergestellten Formteilen werden im Stand der Technik vorzugsweise manuell behandelt bzw. bearbeitet, um eine glatte Oberfläche zu erreichen. Denn im 3D-Druckverfahren hergestellte Formteile, insbesondere wenn Pulver basierte Druckverfahren verwendet werden, weisen in der Regel eine fertigungsbedingte raue Oberfläche auf, was in vielen Fällen den haptischen Eindruck beim Benutzer des Formteils negativ beeinflusst.

Um die Oberflächenbehandlung, insbesondere das Glätten der Oberfläche des Formteils effizienter zu gestalten, ist es bekannt, die zu bearbeitenden Formteile in ein Gefäß zu geben, in das auch ein Ätzmittel gegeben wird. Durch das in Kontakt bringen der Oberfläche des Formteils mit dem Ätzmittel wird ein Glätten der Oberfläche erreicht. Bei diesem Verfahren können auch mehrere zu behandelnde Formteile in das Gefäß gegeben werden.

Das aus dem Stand der Technik bekannte Ätzverfahren hat allerdings den Nachteil, dass die zu behandelnden Formteile zumindest teilweise auf dem Boden des Gefäßes aufliegen oder zumindest teilweise an der Seitenwand des Gefäßes anliegen bzw. dass sich mehrere zu behandelnde Formteile berühren.

An den Stellen, wo die Formteile auf dem Boden oder an der Seitenwand anliegen bzw. wo sich die Formteile berühren, gelangt kein oder nur unzureichend Ätzmittel an die Oberfläche des Formteils, was dazu führt, dass ein oder mehrere Abschnitte der Oberfläche des Formteils nicht oder nur unzureichend geglättet werden. Die Oberfläche der behandelten Formteile weisen daher nach dem Ätzvorgang nach wie vor raue Abschnitte auf, die sich sowohl optisch als auch haptisch von den geglätteten Abschnitten deutlich unterscheiden. Dies macht ein manuelles Nachbearbeiten der Oberfläche der Formteile notwendig.

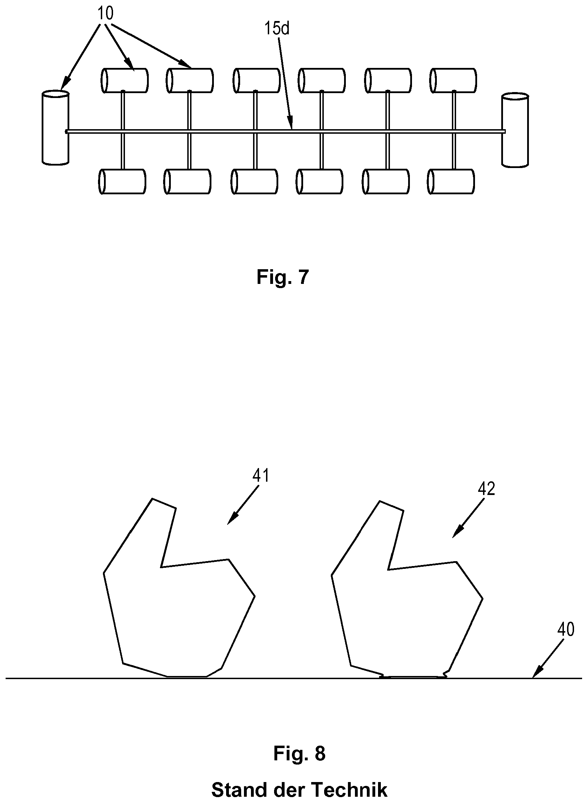

Ein weiterer Nachteil liegt darin, dass die Oberfläche der Formteile während des Ätzvorganges weich wird bzw. aufgeweicht wird. Dies kann dazu führen, dass die Formteile an den Stellen, wo sie den Boden und/oder die Seitenwand des Gefäßes berühren, abgeflacht werden oder gar ihre Form verändern, was nicht wünschenswert ist. **Fig. 8** zeigt ein Formteil vor 41 und nach 42 einem Ätzvorgang, der gemäß einem aus dem Stand der Technik bekannten Verfahren durchgeführt wird, indem das Formteil auf dem Boden 40 eines Behälters aufliegen. Erkennbar ist hier, dass die Unterseite des Formteils 42 nach dem Ätzvorgang abgeflacht ist. Die abgeflachten Stellen müssen in der Regel manuell nachbearbeitet werden. Ferner können sich berührende Formteile miteinander verkleben und müssen nach dem Ätzvorgang meist manuell getrennt und ebenfalls nachbearbeitet werden.

Für eine Serienfertigung ist ein solches manuelles Nachbearbeiten der Formteile allerdings nicht geeignet. Zudem kann bei dem manuellen Nachbearbeiten der noch vorhandenen rauen und gegebenenfalls abgeflachten Oberflächenabschnitte nicht gewährleistet werden, dass die gesamte Oberfläche einheitlich glatt ausgestaltet ist bzw. eine einheitliche Oberflächenstruktur aufweist.

Aus der Druckschrift US 2012/0018115 A1 ist ein Verfahren zur Herstellung eines Bauteils bekannt, bei welchem Verfahren das Bauteil auf einer Plattform durch sukzessives Aufschmelzen von Metallpulver-Schichten unter Ausbildung einer übereinander liegenden Schichtenfolge gebildet wird. Das Verfahren wird dadurch erheblich vereinfacht und flexibler gestaltet, dass zur leichteren Trennung des fertigen Bauteils von der Plattform zwischen dem Bauteil und der Plattform eine Trennschicht vorgesehen wird, welche eine Trennung des fertigen Bauteils von der Plattform ohne Beschädigung des fertigen Bauteils ermöglicht.

### Aufgabe der Erfindung

Aufgabe der vorliegenden Erfindung ist es daher, Lösungen bereitzustellen, die es erlauben, Oberflächen von Formteilen, insbesondere von in einem 3D-Druckverfahren hergestellten Formteilen effizienter zu behandeln, insbesondere effizienter zu glätten, wobei die Lösungen auch eine effiziente Serienfertigung ermöglichen sollen.

### Erfindungsgemäße Lösung

Diese Aufgabe wird erfindungsgemäß durch ein Verfahren zum Behandeln einer Oberfläche zumindest eines in einem 3D-Druckverfahren, insbesondere von in einem pulverbasierten Fertigungs- bzw. Druckverfahren hergestellten Formteils mit einem Ätzmittel, nach Anspruch 1 gelöst. Vorteilhafte Ausgestaltungen und Weiterbildungen der Erfindung ergeben sich aus den jeweiligen abhängigen Ansprüchen. Unter 3D-Druckverfahren werden rein additive Fertigungsverfahren verstanden.

Bereitgestellt wird demnach ein Verfahren zum Behandeln einer Oberfläche zumindest eines in einem 3D-Druckverfahren (additives Fertigungsverfahren), insbesondere von in einem pulverbasierten Fertigungs- bzw. Druckverfahren hergestellten Formteils mit einem Oberflächenbehandlungsmittel, wobei
- an der Oberfläche des Formteils zumindest ein von der Oberfläche abstehendes Haltemittel angeordnet wird,
- das Formteil mit dem zumindest einen Haltemittel derart in einen Behandlungsraum, der eine durch einen Boden und Seitenwandungen gebildete Innenwandung aufweist, einer Behandlungsvorrichtung eingebracht wird, dass die Oberfläche des Formteils nicht in Berührung mit der Innenwandung kommt,
- die Oberfläche des Formteils nach Einbringen in den Behandlungsraum für einen vorbestimmten Zeitraum mit dem Oberflächenbehandlungsmittel beaufschlagt wird, und
- nach dem Beaufschlagen der Oberfläche des Formteils mit dem Oberflächenbehandlungsmittel das Formteil aus dem Behandlungsraum entnommen wird und die Haltemittel von der Oberfläche des Formteils abgelöst werden.

Das Beaufschlagen der Oberfläche des Formteils mit dem Oberflächenbehandlungsmittel kann ein Bedampfen der Oberfläche mit dem Oberflächenbehandlungsmittel, ein Besprühen der Oberfläche mit dem Oberflächenbehandlungsmittel, ein Eintauchen des Formteils in ein flüssiges Oberflächenbehandlungsmittel, und Kombinationen hiervon umfassen.

Während der Beaufschlagung mit dem Oberflächenbehandlungsmittel kann das Formteil in dem Behandlungsraum relativ zu dem Behandlungsraum bewegt, insbesondere gedreht werden.

Nach dem Beaufschlagen der Oberfläche des Formteils mit dem Oberflächenbehandlungsmittel kann das Formteil einer Reinigung unterzogen werden, um an der Oberfläche des Formteils vorhandenes überschüssiges Oberflächenbehandlungsmittel zu entfernen, etwa indem an der Oberfläche vorhandene Säure mit einer Lauge neutralisiert wird, wobei das Formteil zum Reinigen erhitzt wird, um das überschüssige Oberflächenbehandlungsmittel von der Oberfläche des Formteils zu lösen und/oder wobei das Formteil vor und/oder während der Beaufschlagung der Oberfläche mit dem Oberflächenbehandlungsmittel erwärmt wird, um die Behandlungsdauer der Oberflächenbehandlung zu reduzieren.

Das Haltemittel umfasst zumindest einen mindestens zwei Enden aufweisenden Haltestift, wobei zumindest ein Ende des Haltestiftes an der Oberfläche des Formteils befestigt ist.

Das Haltemittel kann eine Gitterbox umfassen, wobei das Formteil innerhalb der Gitterbox angeordnet wird, derart, dass zumindest ein Ende des Haltestiftes an der Oberfläche des Formteils und zumindest ein anderes Ende des Haltestiftes an der Wandung der Gitterbox befestigt ist, wobei die Oberfläche des Formteils die Gitterbox nicht berührt.

Das Haltemittel kann zumindest einen mindestens zwei Enden aufweisenden Abstandshalter umfassen, wobei mehrere Formteile beabstandet zueinander und sich nicht berührend angeordnet werden, wobei die mehreren Formteile über den zumindest einen Abstandshalter miteinander verbunden werden.

Die mehreren Formteile können innerhalb der Gitterbox angeordnet sein.

Das Haltemittel und das Formteil können einteilig ausgestaltet sein und/oder in dem 3D-Druckverfahren einteilig hergestellt werden.

Vorteilhaft ist es, wenn der Haltestift des Haltemittels so relativ zur Oberfläche des Formteils angeordnet wird, dass der Haltestift zumindest abschnittsweise außerhalb einer gedachten konvexen Hülle des Formteils liegt.

Zwischen der Oberfläche des Formteils und dem Haltemittel kann eine Sollbruchstelle ausgebildet werden, an der das Haltemittel nach dem Beaufschlagen der Oberfläche des Formteils mit dem Ätzmittel von dem Formteil lösbar ist.

Eine minimale Querschnittsfläche des Haltemittels an dem der Oberfläche des Formteils zugewandten Abschnitt kann in Abhängigkeit vom Gewicht des Formteils, von der Oberflächenbehandlungsdauer, von dem verwendeten Oberflächenbehandlungsmittel, von dem Fertigungsverfahren, von dem verwendeten Material und/oder Kombinationen hiervon gewählt werden.

Vorteilhaft ist es, wenn
- das zumindest eine Formteil ein erstes Material oder eine erste Materialzusammensetzung und das zumindest eine Haltemittel ein zweites Material oder eine zweite Materialzusammensetzung aufweisen,
- zum Ablösen der Haltemittel von der Oberfläche des Formteils zumindest die Haltemittel mit einem vorzugsweisen flüssigen Trennmittel beaufschlagt werden,
wobei das Trennmittel so gewählt wird, dass sich die Haltemittel innerhalb einer vorbestimmten Zeit zumindest teilweise vollständig auflösen, ohne dabei das Formteil oder die Oberfläche des Formteils zu verändern, insbesondere zu beschädigen.

Es hat sich als vorteilhaft erwiesen, wenn das Formteil in einem pulverbasierten Fertigungs- bzw. Druckverfahren hergestellt wird, das erste Material oder die erste Materialzusammensetzung ein erstes Klebemittel und das zweite Material oder die zweite Materialzusammensetzung ein zweites Klebemittel aufweisen, wobei das erste Klebemittel gegenüber dem Trennmittel beständig ist und das zweite Klebemittel gegenüber dem Trennmittel nicht beständig ist.

Bereitgestellt wird des Weiteren ein Verfahren zum Herstellen eines Formteils in einem 3D-Druckverfahren, insbesondere in einem pulverbasierten Fertigungs- bzw. Druckverfahren, welches nach der Herstellung einer Oberflächenbehandlung mit einem Oberflächenbehandlungsmittel zu unterziehen ist, wobei das Formteil zusammen mit zumindest einem von der Oberfläche des Formteils abstehenden Haltemittel hergestellt wird, wobei das Formteil und das zumindest eine Haltemittel einteilig ausgestaltet ist.

Das Haltemittel kann zumindest teilweise über eine gedachte konvexe Hülle des Formteils überstehen.

Das Haltemittel kann als Abstandshalter hergestellt werden, wobei ein Abstandshalter zumindest zwei Formteile beabstandet zueinander miteinander verbindet, wobei der Abstandshalter ebenfalls in dem 3D-Druckverfahren hergestellt wird, sodass der Abstandshalter und die Formteile einteilig ausgestaltet sind.

Das Haltemittel kann als Gitterbox mit zumindest einem Haltestift hergestellt werden, wobei das Formteil innerhalb der Gitterbox hergestellt wird und wobei das Formteil mit dem zumindest einen Haltestift an der Gitterbox befestigt ist, wobei der zumindest eine Haltestift ebenfalls in dem 3D-Druckverfahren hergestellt wird, sodass die Gitterbox, der zumindest eine Haltestift und das Formteil einteilig ausgestaltet sind.

Zur Herstellung des Formteils kann ein erstes Material oder eine erste Materialzusammensetzung und zum Herstellen des Haltemittels ein zweites Material oder eine zweite Materialzusammensetzung verwendet werden, wobei das erste Material oder die erste Materialzusammensetzung und das zweite Material oder die zweite Materialzusammensetzung so gewählt werden, dass mit einem vorzugsweise flüssigen Trennmittel die Haltemittel innerhalb einer vorbestimmten Zeit vollständig auflösbar sind, ohne dabei das Formteil oder die Oberfläche des Formteils zu verändern, insbesondere zu beschädigen.

Das Oberflächenbehandlungsmittel umfasst ein Ätzmittel und/oder ein Lösungsmittel.

Bereitgestellt wird des weiteren ein Datensatz zum Steuern eines 3D-Druckers zur Herstellung eines dreidimensionalen Formteils, welches nach der Herstellung einer Oberflächenbehandlung mit einem Oberflächenbehandlungsmittel zu unterziehen ist, wobei der Datensatz von dem 3D-Drucker interpretierbare erste und zweite Anweisungen aufweist, gemäß denen der 3D-Drucker das Formteil herstellt, wobei
- die ersten Anweisungen Informationen über die Geometrie des herzustellenden Formteils umfassen, und
- die zweiten Anweisungen Informationen über die Geometrie von zumindest einem herzustellenden Haltemittel umfassen,
wobei die zweiten Anweisungen so gewählt sind, dass das zumindest eine Haltemittel als von der Oberfläche des Formteils abstehendes Haltemittel hergestellt wird und einteilig mit dem Formteil hergestellt wird.

Die zweiten Anweisungen können weiter so gewählt ein, dass
- das Haltemittel als zumindest teilweise über eine gedachte konvexe Hülle des Formteils überstehendes Haltemittel hergestellt wird, und/oder
- das Haltemittel als eine das Formteil umgebende Gitterbox hergestellt wird, wobei das Formteil mit von dem 3D-Drucker hergestellten Haltestiften an der Gitterbox befestigt ist, und/oder
- Abstandshalter hergestellt werden, die zumindest zwei zueinander beabstandete und sich nicht berührende Formteile miteinander verbinden, wobei die Formteile und die Abstandshalter einteilig hergestellt werden.

Bereitgestellt wird ferner ein Computerprogrammprodukt, insbesondere Computeranwendung, das in den Speicher eines Computers geladen werden kann und auf dem Computer zur Ausführung gebracht werden kann, zur Herstellung eines von einem 3D-Drucker interpretierbaren Datensatzes zum Herstellen zumindest eines dreidimensionalen Formteils, wobei das Computerprogrammprodukt Programmabschnitte umfasst, die angepasst sind,
- basierend auf den Geometriedaten des zumindest einen Formteils eine Anzahl von Haltemitteln zu ermitteln, die von der Oberfläche des Formteils abstehen und/oder zumindest zwei zueinander beabstandete und sich nicht berührende Formteile miteinander verbinden, wobei die Haltemittel und das zumindest eine Formteil einteilig ausgestaltet sind,
- für jedes ermittelte Haltemittel einen Querschnitt und/oder eine Länge und/oder eine Position an der Oberfläche des Formteils und/oder eine Form zu ermitteln, und
- für die so ermittelten Haltemittel von dem 3D-Drucker interpretierbare Anweisungen zu erzeugen und in den Datensatz einzufügen.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: ein erfindungsgemäßes in einem 3D-Druckverfahren hergestelltes Formteil;
- Fig. 2: einen Querschnitt eines Formteils mit einer gedachten konvexen Hülle;
- Fig. 3: ein an der Oberfläche eines Formteils angeordnetes Haltemittel (Haltestift) in einer vergrößerten Ansicht;
- Fig. 4: zwei in einer als Gitterbox ausgestaltete Haltemittel angeordnete Formteile;
- Fig. 5: eine alternative Ausgestaltung der in Fig. 4 gezeigten Gitterbox;
- Fig. 6: zwei Formteile, die erfindungsgemäß mit Abstandshalter miteinander verbunden sind;
- Fig. 7: eine Anzahl von Formteilen, die erfindungsgemäß einem Abstandshalter miteinander verbunden sind; und
- Fig. 8: ein Formteil, dessen Oberfläche gemäß einem aus dem Stand der Technik bekannten Verfahren behandelt wird (vor und nach der Oberflächenbehandlung).

Detaillierte Beschreibung der Erfindung

Erfindungsgemäß werden die zu bearbeitenden Formteile in einem generativen Fertigungsverfahren bzw. in einem additivem Fertigungsverfahren (3D-Druckverfahren) hergestellt. Die Oberfläche des hergestellten Formteils weist fertigungsbedingte Unebenheiten auf, die ein Anhaften von Schmutz bzw. Verunreinigungen an der Oberfläche des Formteils begünstigen. Bei Pulver basierten 3D-Druckverfahren kann zudem ein das Formteil umgebendes Pulver an der Oberfläche des Formteils haften bleiben oder mit der Oberfläche verschmolzen sein, was ebenfalls zu einer rauen Oberfläche führt. Die raue bzw. poröse Oberfläche des Formteils wirkt sich zudem negativ auf die Haptik des Formteils aus.

Erfindungsgemäß ist es daher vorgesehen, die Oberfläche eines in einem 3D-Druckverfahren hergestellten Formteils zu glätten, insbesondere unter Verwendung eines Oberflächenbehandlungsmittels, etwa ein Ätzmittel oder ein geeignetes Lösungsmittel. Das zu verwendende Oberflächenbehandlungsmittel hängt im Wesentlichen von dem Material bzw. von den Materialien ab, mit dem bzw. denen das Formteil hergestellt wurde.

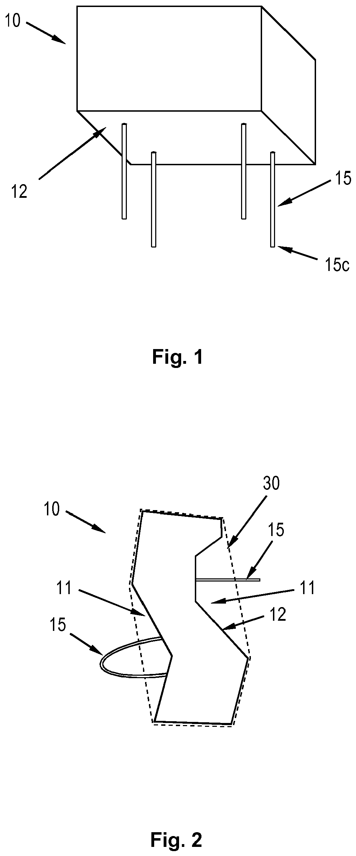

**Fig. 1** zeigt ein Formteil 10, das gemäß dem erfindungsgemäßen Verfahren zum Herstellen eines Formteils in einem 3D-Druckverfahren hergestellt wurde.

Das Formteil 10 weist eine zu behandelnde, d.h. zu glättende Oberfläche 12 auf.

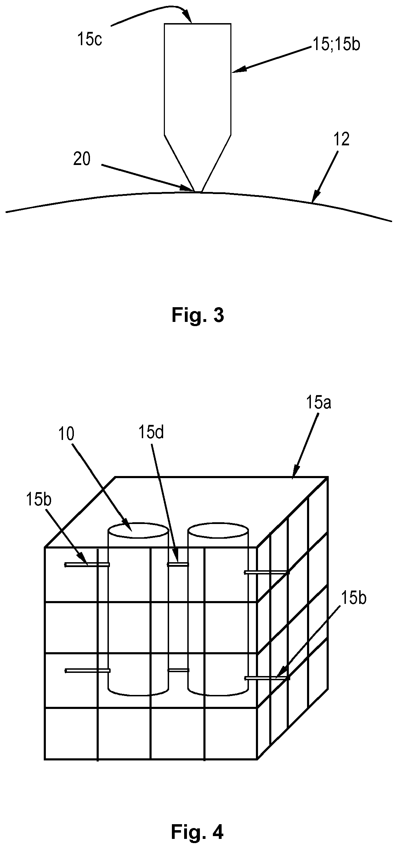

An dem Formteil 10 bzw. an der Oberfläche 12 des Formteils 10 sind Haltemittel 15 angeordnet, die hier als Haltestifte ausgestaltet sind. Alternativ oder zusätzlich können auch als Abstandshalter ausgestaltete Haltemittel vorgesehen sein, wie mit Bezug auf Fig. 4, Fig. 6 und Fig. 7 erläutert.

Die Haltestifte 15 sind so dimensioniert, dass diese das Formteil 10 tragen können, wenn das Formteil 10 mit bzw. auf den Haltestiften 15 auf einer Oberfläche abgestellt wird. So ist es beispielsweise möglich, das Formteil 10 in einen Behandlungsraum einer Ätzvorrichtung abzustellen, sodass lediglich die von der Oberfläche 12 des Formteils 10 abgewandten Enden 15c der Haltestifte 15 einen Boden des Behandlungsraumes berühren. Dadurch wird vermieden, dass das Formteil 10 bzw. die Oberfläche 12 des Formteils auf dem Boden des Behandlungsraumes der Ätzvorrichtung aufliegt, wodurch vermieden wird, dass die Oberfläche 12 des Formteils 10 nach dem Ätzvorgang Bereiche bzw. Abschnitte aufweist, die gar nicht oder nur unzureichend geglättet wurden. Zudem wird dadurch vermieden, dass sich die Geometrie des Formteils ändert, etwa abgeflachte Bereiche entstehen, wenn die Oberfläche des Formteils während des Ätzvorganges weich bzw. aufgeweicht wird.

Zudem sind die Haltestifte 15 so dimensioniert, dass die Verbindungsstellen, an denen die Haltestifte 15 an der Oberfläche 12 des Formteils 10 angeordnet sind, eine möglichst geringe Querschnittsfläche aufweisen. Beispielsweise können die Haltestifte an dem der Oberfläche des Formteils zugewandten Abschnitt eine Querschnittsfläche aufweisen, die kleiner als 5 mm², vorzugsweise kleiner als 2 mm², besonders bevorzugt kleiner als 1 mm² ist. Die genannten Querschnittsflächen sind lediglich beispielhafte, aber dennoch vorteilhafte Querschnittsflächen. Erfindungsgemäß werden die Dimensionen der Haltestifte 15 in Abhängigkeit vom Gewicht des Formteils, von der Oberflächenbehandlungsdauer und/oder von dem verwendeten Oberflächenbehandlungsmittel gewählt. So können beispielsweise bei sehr leichten Formteilen Haltestifte mit sehr geringen Querschnittsflächen vorgesehen werden.

Die Haltemittel 15 werden nach dem Ätzvorgang und gegebenenfalls nach einem Trocknungsvorgang von der Oberfläche 12 des Formteils 10 abgelöst, sodass lediglich die sehr kleinen Verbindungsstellen als unbehandelte Abschnitte der Oberfläche 12 zurückbleiben. Diese sehr kleinen Verbindungsstellen wirken sich weder optisch noch haptisch nachteilig aus. Denn das für die Herstellung des Formteils verwendete Material ist an den Verbindungstellen ohnehin während der Herstellung perfekt verschmolzen bzw. verklebt, sodass durch das Ablösen der Haltemittel 15 von der Oberfläche 12 des Formteils 10 zwar unbehandelte Verbindungsstellen zurückbleiben, diese aber aufgrund des Verschmelzens bzw. Verklebens des Materials während der Herstellung ohnehin glatt sind. Eine Oberflächenbehandlung der Verbindungsstellen ist daher nicht notwendig.

Beispielsweise können die Haltemittel 15, etwa mit einem Messer oder einer Klinge abgeschnitten werden.

In einer vorteilhaften Ausgestaltung der Erfindung ist es vorgesehen, zum Ablösen bzw. Entfernen der Haltemittel 15 von dem Formteil 10 die Haltemittel mit einem vorzugsweise flüssigen Trennmittel zu bearbeiten. Dies kann beispielweise erfolgen, indem das Formteil mit den daran angeordneten Haltemittel für einen vorbestimmten Zeitraum in das flüssige Trennmittel eingetaucht wird. Als Trennmittel kann beispielsweise ein Lösungsmittel verwendet werden.

Das Trennmittel bewirkt, dass sich die Haltemittel zumindest teilweise auflösen. Um ein Auflösen der Haltemittel in dem Trennmittel zu gewährleisten, ohne dass das Formteil und/oder dessen Oberfläche beeinträchtigt werden, ist es erfindungsgemäß vorteilhaft, wenn die Haltemittel aus einem Material oder aus einer Materialzusammensetzung hergestellt werden, das bzw. die verschieden von dem Material oder der Materialzusammensetzung des Formteils ist.

Das Material bzw. die Materialzusammensetzung des Formteils wird in Abhängigkeit des verwendeten Trennmittels so gewählt, dass es gegenüber dem Trennmittel beständig ist. Das Material bzw. die Materialzusammensetzung der Haltemittel hingegen wird so gewählt, dass es gegenüber dem Trennmittel nicht beständig ist und sich somit in dem Trennmittel auflösen kann. Umgekehrt kann auch das Trennmittel in Abhängigkeit von den verwendeten Materialien so gewählt werden, dass es die Haltemittel auflösen kann, während das Formteil von dem Trennmittel nicht beeinträchtigt wird.

Wenn das Formteil und die daran angeordneten Haltemittel in einem pulverbasierten 3D-Druckverfahren hergestellt werden, kann für die Haltemittel das gleiche Pulvermaterial verwendet werden wie für die Haltemittel, sofern die Herstellung unter Verwendung eines Klebemittels erfolgt. Um ein Auflösen der Haltemittel in dem Trennmittel zu gewährleisten, ohne dass das Formteil beeinträchtigt wird, ist es vorgesehen, für die Haltemittel ein anderes Klebemittel zu verwenden als für das Formteil. Vorzugsweise wird für das Formteil ein Klebemittel verwendet, das gegenüber dem Trennmittel beständig ist, während für die Haltemittel ein Klebemittel verwendet wird, das gegenüber dem Trennmittel nicht beständig ist.

Erfindungsgemäß sind die Haltestifte auch so ausgestaltet, dass das Formteil mit Ihnen in den Behandlungsraum einer Ätzvorrichtung gehängt werden kann, ohne dass das Formteil 10 den Boden bzw. die Innenwandung des Behandlungsraumes berührt. In einer weiteren alternativen Ausgestaltung können in dem Behandlungsraum Aufnahmevorrichtung vorgesehen sein, die die von der Oberfläche 12 des Formteils 10 abgewandten Enden der Haltestifte 15 aufnehmen. Beispielsweise können an dem Boden des Behandlungsraumes Sackbohrungen vorgesehen sein, in die die Haltestifte eingesteckt bzw. eingeschoben werden können.

Gezeigt sind in Fig. 1 gerade Haltestifte 15 mit zwei Enden. Alternativ hierzu können auch gekrümmte Haltestifte vorgesehen werden. Ferner können auch Haltestifte vorgesehen werden, die mehr als zwei Enden aufweisen, etwa Haltestifte in Form eines T-Profils, die drei Enden aufweisen. Erfindungsgemäß wesentlich ist, dass die Haltestifte mit zumindest einem Ende an der Oberfläche des Formteils befestigt werden. Eine weitere mögliche Ausgestaltung eines Haltemittels bzw. Haltestiftes ist mit Bezug auf Fig. 2 gezeigt.

Nachdem das Formteil in den Behandlungsraum eingebracht wurde, wird das Formteil mit dem Ätzmittel beaufschlagt, was beispielsweise mittels Bedampfen der Oberfläche oder mittels Eintauchen des Formteils in ein flüssiges Ätzmittel bewerkstelligt werden kann. Zudem kann die Ätzvorrichtung so ausgestaltet sein, dass das Formteil 10 während der Oberflächenbehandlung in dem Behandlungsraum bewegt, beispielsweise gedreht, werden kann. Das Bewegen des Formteils in dem Behandlungsraum erfolgt hierbei so, dass die Oberfläche 12 des Formteils nicht in Berührung mit dem Boden bzw. mit der Innenwandung des Behandlungsraumes kommt. Insbesondere beim Bedampfen der Oberfläche mit dem Ätzmittel kann durch das Bewegen des Formteils in dem Behandlungsraum ein gleichmäßiges Bedampfen der Oberfläche und damit ein gleichmäßiges Glätten der Oberfläche gewährleistet werden.

In Fig. 1 ist ein Formteil mit vier an der Oberfläche 12 angeordneten Haltemitteln gezeigt. Je nach Geometrie des Formteils 10 können auch mehr oder weniger als vier Haltemittel bzw. Haltestifte vorgesehen sein.

Erfindungsgemäß ist es vorgesehen, dass die Haltemittel und das Formteil einteilig bzw. einstückig ausgestaltet sind und einteilig bzw. einstückig in einem 3D-Druckverfahren hergestellt werden. Das bedeutet, dass das Formteil zusammen mit den daran angeordneten Haltemitteln hergestellt bzw. gedruckt wird. Vorteilhaft kann es hierbei sein, wenn die Haltemittel bzw. die Haltestifte an solchen Bereichen der Oberfläche 12 des Formteils 10 vorgesehen werden, die optisch weniger exponierte Bereiche darstellen. Solche optisch weniger exponierte Bereiche können beispielsweise Vertiefungen an der Oberfläche des Formteils sein, wie in Fig. 2 gezeigt.

Weil das Formteil zusammen mit den Haltemitteln bzw. Haltestiften hergestellt bzw. gedruckt wird, kann das Formteil unmittelbar nach dem Drucken ohne weitere Vorbereitungsmaßnahmen dem Ätzvorgang zugeführt werden. Ein Anordnen der Haltemittel bzw. Haltestifte nach dem Drucken des Formteils 10 kann so gänzlich entfallen.

Zum Drucken bzw. Herstellen des Formteils mit den daran angeordneten Haltemittel bzw. Haltestiften ist es vorgesehen, dem 3D-Drucker einen Datensatz bzw. eine Druckdatei zur Verfügung zu stellen, wobei der Datensatz bzw. die Druckdatei Anweisungen bzw. Informationen über die Geometrie des Formteils und über die Geometrie der Haltemittel aufweist. Der Datensatz selbst kann mit einem herkömmlichen CAD-Programm oder 3D-Design/Modelling Programm hergestellt werden, das angepasst ist, einen für den 3D-Drucker lesbaren bzw. interpretierbaren Datensatz zu erzeugen. In einer Ausgestaltung kann das Programm angepasst sein, basierend auf der Geometrie des Formteils automatisch Haltemittel zu erzeugen und diese in den Datensatz einzufügen. In einer weiteren alternativen Ausgestaltung kann der 3D-Drucker angepasst sein, für einen Datensatz, der nur Informationen über die Geometrie des Formteils enthält, geeignete Haltemittel zu berechnen und diese zusammen mit dem Formteil auszudrucken. Diese Ausgestaltungen haben den Vorteil, dass sich der Entwickler bzw. Designer eines Formteils keine Gedanken darüber machen muss, wo und wie viele Haltemittel an dem Formteil angeordnet werden müssen.

**Fig. 2** zeigt einen Querschnitt eines Formteils 10, welches eine Vertiefung bzw. eine Aussparung 11 oder einen konkav verlaufenden Oberflächenabschnitt aufweist. Sofern das Haltemittel bzw. ein Haltestift 15 an der Oberfläche 12 dieser Aussparung 11 angeordnet werden soll, ist es vorgesehen, dass der Haltestift so relativ zur Oberfläche des Formteils angeordnet wird und so dimensioniert ist, dass das von der Oberfläche abgewandte Ende des Haltestiftes au-ßerhalb einer gedachten konvexen Hülle 30 des Formteils liegt. Diese Anordnung ist insbesondere dann vorteilhaft, wenn die Aussparung bzw. Vertiefung 11 einen optisch weniger exponierten Abschnitt des Formteils 10 bildet. Durch das Überstehen des Haltestiftes 12 an der gedachten konvexen Hülle 30 ist zudem gewährleistet, dass beispielsweise beim Abstellen des Formteils 10 in dem Behandlungsraum auf den Stiften 15 die Oberfläche des Formteils den Boden nicht berührt.

In einer weiteren Ausgestaltung kann das Haltemittel bzw. der Haltestift 15 auch gekrümmt sein, wobei das Haltemittel mit beiden Enden an der Oberfläche des Formteils befestigt ist. Sind beide Enden in der Aussparung bzw. in dem konkav verlaufenden Oberflächenabschnitt angeordnet, so ist das Haltemittel so zu dimensionieren, dass dieses abschnittsweise außerhalb der gedachten konvexen Hülle 30 verläuft.

**Fig. 3** zeigt einen Abschnitt einer Oberfläche 12 eines Formteils mit einem daran angeordneten Haltestift 15 in einer vergrößerten Ansicht.

Erfindungsgemäß kann es vorteilhaft sein, wenn der Haltestift an dem der Oberfläche 12 zugewandten Ende verjüngend zusammenläuft, sodass der Haltestift an sich eine ausreichende Stabilität aufweist und die Stelle, an der der Haltestift an der Oberfläche befestigt ist, gleichzeitig eine minimale Querschnittsfläche aufweist. Werden mehrere Haltemittel bzw. Haltestifte an der Oberfläche des Formteils 10 angeordnet, kann die Querschnittsfläche in dem Berührungspunkt zwischen dem Haltestift und der Oberfläche des Formteils noch weiter reduziert werden.

In einer Ausgestaltung der Erfindung kann es vorgesehen sein, zwischen der Oberfläche des Formteils und dem Haltemittel eine Sollbruchstelle 20 vorzusehen bzw. während des Druckens des Formteils mit den Haltestiften an dieser Stelle eine Sollbruchstelle 20 auszubilden. Dadurch kann das Entfernen der Haltemittel bzw. der Haltestifte nach dem Ätzvorgang vereinfacht werden.

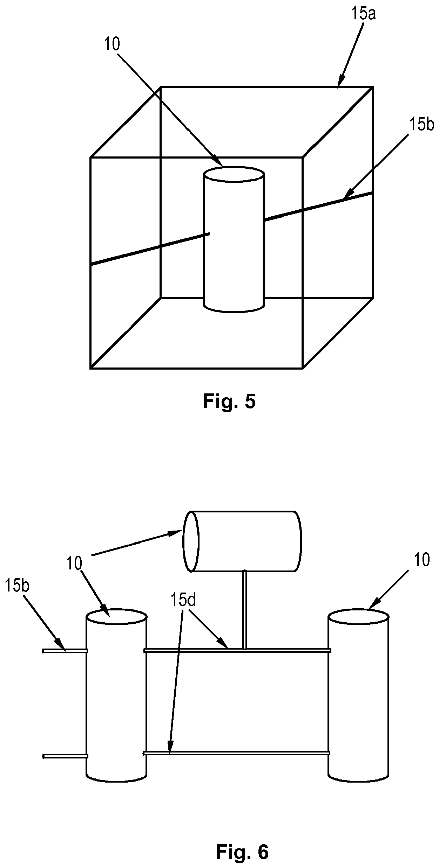

Die in Fig. 3 gezeigte Ausgestaltung des der Oberfläche 12 des Formteils zugwandten Abschnittes des Haltemittels 15 kann vorteilhaft auch für die in Fig. 4 und Fig. 6 gezeigten Abstandshalter 15d vorgesehen werden. Die den Oberflächen zugwandten Abschnitte der Abstandshalter 15d können demnach ebenfalls verjüngend zusammenlaufen und es können gegebenenfalls ebenfalls Sollbruchstellen vorgesehen sein.

**Fig. 4** zeigt eine vorteilhafte Ausgestaltung eines erfindungsgemäßen Haltemittels, welches insbesondere dazu geeignet ist, mehrere Formteile 10 in einem Behandlungsraum einer Ätzvorrichtung anzuordnen, ohne dass die Formteile den Boden bzw. die Innenwandung des Behandlungsraumes berühren und ohne dass sich die Formteile gegenseitig berühren. Werden mehrere Formteile gleichzeitig einem Ätzvorgang unterzogen, muss auch gewährleistet werden, dass sich die Formteile nicht gegenseitig berühren, um zu verhindern, dass an den Berührungspunkten zwischen den Formteilen unbehandelte Abschnitte der Oberfläche zurückbleiben und um zu verhindern, dass sich berührende Formteile am Berührungspunkt miteinander verschmelzen. Ein Verschmelzen kann daher zustande kommen, weil die Oberfläche von dem eingesetzten Ätzmittel aufgeweicht werden kann.

Bei der in Fig. 4 gezeigten Ausgestaltung weist das Haltemittel eine Gitterbox 15a mit daran angeordneten Haltestiften 15b auf. Die Formteile 10 sind innerhalb der Gitterbox 15a angeordnet, und zwar so, dass sich die Formteile 10 vollständig innerhalb der Begrenzungsflächen der Gitterbox 15a befinden. Mittels der an der Gitterbox 15a angeordneten und in das Innere der Gitterbox hineinreichenden Haltestifte 15b werden die Formteile 10 in einer vorbestimmten Position innerhalb der Gitterbox gehalten.

Zwischen zwei Formteilen 10 sind zudem Abstandshalter 15d angeordnet, die beidseitig mit jeweils einem Formteil verbunden sind. Ein Abstandshalter 15d kann auch so ausgestaltet sein, dass mehr als zwei Formteile 10 beabstandet zueinander innerhalb der Gitterbox gehalten werden. Ein solcher, als T-Profil ausgestalteter Abstandshalter 15d ist in Fig. 6 gezeigt. An den drei Enden des T-Profil förmigen Abstandshalters ist jeweils ein Formteil 10 befestigt.

Die Anzahl der vorzusehenden Haltestifte 15b und die Anzahl der vorzusehenden Abstandshalter 15d hängen von der Anzahl der in der Gitterbox angeordneten Formteile und von der Geometrie der einzelnen Formteile ab, wobei in der Gitterbox mehrere Formteile angeordnet werden können, die jeweils eine andere Geometrie aufweisen.

Bei dem in Fig. 4 gezeigten Beispiel sind aus Gründen der Übersichtlichkeit lediglich die Gitterstäbe der vorderen Seitenwand und der rechten Seitenwand der Gitterbox gezeigt.

In einer Ausgestaltung der Erfindung kann auf die Gitterstäbe auch verzichtet werden, wenn die Haltestifte 15b an den Kanten der Gitterbox befestigt werden, wie in **Fig. 5** gezeigt.

Das Vorsehen einer Gitterbox mit daran angeordneten Haltestiften und die Verwendung von Abstandshaltern zwischen den Formteilen und der Anordnung der Formteile innerhalb der Gitterbox, wie mit Bezug auf Fig. 4 erläutert, hat den Vorteil, dass die Formteile 10 in beliebiger Ausrichtung in den Behandlungsraum der Ätzvorrichtung gegeben werden können, wobei gleichzeitig gewährleistet ist, dass die Formteile weder den Boden noch die Seitenwandung berühren. Zudem kann die gesamte Gitterbox mit den darin angeordneten Formteilen, etwa unter Einsatz eines Rührers, bewegt werden, ohne dass die Formteile den Boden bzw. die Seitenwandung oder den Rührer berühren.

Die Gitterbox gewährleistet darüber hinaus, dass während des Ätzvorganges unabhängig vom eingesetzten Ätzverfahren die gesamte Oberfläche der Formteile weitgehend gleichmäßig mit dem Ätzmittel beaufschlagt wird. Vorteilhaft ist hierbei, wenn nur so viele Gitterstäbe vorgesehen werden, die für ein Befestigen der Haltestifte 15b an der Gitterbox notwendig sind.

Die in Fig. 4 und Fig. 5 gezeigten Gitterboxen 15a, die Haltestifte 15b, die Abstandshalter 15d und die in der Gitterbox angeordneten Formteile 10 werden erfindungsgemäß einteilig bzw. einstückig hergestellt, d.h. in einem einzelnen Druckvorgang mit einem 3D-Drucker hergestellt bzw. ausgedruckt.

Die Verbindungsstellen zwischen den Haltestiften 15b und den Formteilen 10 bzw. zwischen den Abstandshaltern 15d und den Formteilen 10 können so ausgestaltet sein, wie mit Bezug auf Fig. 3 gezeigt.

Die Abstandshalter 15d können mittels Schneiden von den Formteilen gelöst werden. Alternativ hierzu können die Abstandshalter 15d aus einem Material bestehen, das verschieden von dem Material der Formkörper ist, sodass die Abstandshalter mit Hilfe eines Trennmittels von dem Formkörper gelöst werden können, wie mit Bezug auf Fig. 1 erläutert.

Der vorstehend mit Bezug auf Fig. 1 beschriebene Datensatz bzw. die Druckdatei, die einem 3D-Drucker zur Verfügung gestellt wird, kann des Weiteren Anweisungen bzw. Informationen über die Geometrie der Abstandshaltern 15d aufweisen.

Das CAD-Programm bzw. 3D-Design/Modelling Programm kann angepasst sein, basierend auf der Geometrie der in der Gitterbox angeordneten Formteile automatisch Abstandshalter zu erzeugen, mit denen die Formteile beabstandet zueinander miteinander verbunden werden, und diese in den Datensatz einzufügen. In einer alternativen Ausgestaltung kann der 3D-Drucker selbst angepasst sein, für einen Datensatz, der nur Informationen über die Geometrie der Formteil enthält, geeignete Abstandshalter zu berechnen und diese zusammen mit den Formteilen auszudrucken.

In Fig. 4 und Fig. 5 sein jeweils Gitterboxen 15a gezeigt, die die Form eines Quaders haben. Erfindungsgemäß eignen sich als Gitterbox jedoch sämtliche geometrischen Formen, insbesondere auch kugelförmige oder zylinderförmige Gitterboxen. In einer speziellen Ausgestaltung können auch Gitterboxen vorgesehen werden, die im Wesentlichen eine konvexe, vorzugsweise minimale konvexe Hülle beschreibt, in der mehrere zueinander beabstandete Formteile eingeschlossen sind.

**Fig. 6** zeigt eine erfindungsgemäße Ausgestaltung, bei der mehrere Formteile 10 beabstandet zueinander angeordnet sind und mittels Abstandshalter 15d miteinander verbunden sind. Ein Abstandshalter ist hier als gerader Abstandshalter ausgestaltet, mit dem die beiden senkrechten Formteile mit einander verbunden sind. Der andere Abstandshalter ist als T-förmiger Abstandshalter ausgestaltet. Der T-förmige Abstandshalter weist drei Enden auf, die jeweils mit einem der drei Formteile miteinander verbunden sind.

An dem linken der beiden senkrechten Formkörper sind zudem zwei Haltemittel bzw. Haltestifte 15b angeordnet, mit dazu vorgesehen sind, den aus Formkörper 10 und Abstandhalter 15d gebildeten Verbund so in einer Ätzvorrichtung anzuordnen, dass die Formkörper während des Ätzvorganges weder Boden noch Seitenwandungen berühren. Beispielsweise kann der Verbund aus Formkörper 10 und Abstandhalter 15d mit den Haltestiften 15b auf den Boden der Ätzvorrichtung gestellt werden.

Im Unterschied zu den in Fig. 4 und Fig. 5 gezeigten Ausgestaltungen ist bei der in Fig. 6 gezeigten Ausgestaltung keine Gitterbox vorgesehen. Dennoch können die mehreren Formteile so beabstandet zueinander in der Ätzvorrichtung angeordnet werden, dass sie den Wandungen der Ätzvorrichtung nicht berühren.

In Fig. 4 und Fig. 6 sind Abstandshalter gezeigt, die zwei oder drei Enden aufweisen, an denen Formkörper befestigt werden können. Grundsätzlich können erfindungsgemäß Abstandshalter vorgesehen sein, die *n* Enden aufweisen, um *n* Formteile miteinander zu verbinden.

Ein Beispiel eines Abstandshalters 15d mit einer Vielzahl von Enden ist in **Fig. 7** gezeigt. Der Abstandshalters 15d ist im Wesentlichen Doppelrechenförmig ausgestaltet. An jedem Ende des Abstandshalters 15d ist ein Formkörper 10 angeordnet. Selbstverständlich können unterschiedliche Formkörper beabstandet zueinander mit einem Abstandshalters 15d verbunden werden.

Bei dem in Fig. 7 gezeigten Beispiel ist keine Gitterbox vorgesehen. Dennoch kann der in Fig. 7 gezeigt Verbund aus Formkörper 10 und Abstandshalter 15d in einer Gitterbox angeordnet werden, wie beispielsweise mit Bezug auf Fig. 4 gezeigt.

Das erfindungsgemäße Verfahren zum Behandeln einer Oberfläche eines in einem 3D-Druckverfahren hergestellten Formteils ermöglicht in vorteilhafter Weise, das gedruckte Formteil direkt einem Ätzvorgang zuzuführen, ohne dass vorbereitende Maßnahmen am Formteil selbst oder Maßnahmen im Behandlungsraum der Ätzvorrichtung durchgeführt werden müssen, die ein Berühren des Formteils des Bodens oder der Innenwandung des Behandlungsraumes verhindern. Der zeitliche Aufwand für das Glätten der Oberfläche des Formteils kann so erheblich reduziert werden. Insbesondere eignet sich das erfindungsgemäße Verfahren zum Behandeln der Oberfläche eines Formteils für die industrielle Fertigung von Formteilen.

### Bezugszeichen:

- 10: Formteil (in einem 3D-Druckverfahren hergestellt)
- 11: Aussparung bzw. Vertiefung an der Oberfläche des Formteils
- 12: Oberfläche des Formteils 10
- 15: Haltemittel
- 15a: Gitterbox des Haltemittels
- 15b: Haltestifte des Haltemittels
- 15c: abstehendes Ende des Haltestiftes
- 15d: Abstandshalter
- 20: Sollbruchstelle
- 30: (gedachte) konvexe Hülle des Formteils 10
- 40: Boden
- 41: Formteil vor dem Ätzvorgang
- 42: Formteil während bzw. nach dem Ätzvorgang

## Patentansprüche

1. Verfahren zum Behandeln einer Oberfläche zumindest eines in einem 3D-Druckverfahren, insbesondere von in einem pulverbasierten Fertigungs- bzw. Druckverfahren hergestellten Formteils (10) mit einem Oberflächenbehandlungsmittel, um die Oberfläche des Formteils zu glätten, wobei
- an der Oberfläche (12) des Formteils (10) zumindest ein von der Oberfläche abstehendes Haltemittel (15) angeordnet wird,
- das Formteil mit dem zumindest einen Haltemittel (15) derart in einen Behandlungsraum, der eine durch einen Boden und Seitenwandungen gebildete Innenwandung aufweist, einer Ätzvorrichtung eingebracht wird, dass die Oberfläche (12) des Formteils (10) nicht in Berührung mit der Innenwandung kommt,
- die Oberfläche (12) des Formteils (10) nach Einbringen in den Behandlungsraum für einen vorbestimmten Zeitraum mit dem Oberflächenbehandlungsmittel beaufschlagt wird, und
- nach dem Beaufschlagen der Oberfläche (12) des Formteils mit dem Oberflächenbehandlungsmittel das Formteil (10) aus dem Behandlungsraum entnommen wird und die Haltemittel (15) von der Oberfläche des Formteils abgelöst werden,
wobei
- das Haltemittel (15) zumindest einen mindestens zwei Enden aufweisenden Haltestift (15b) umfasst, wobei zumindest ein Ende des Haltestiftes an der Oberfläche (12) des Formteils (10) befestigt wird,
- der Haltestift (15b) so ausgestaltet ist, dass das Formteil (10) mit ihm in den Behandlungsraum der Ätzvorrichtung gehängt werden kann, ohne dass das Formteil (10) die Innenwandung des Behandlungsraumes berührt, und
- das Oberflächenbehandlungsmittel ein Ätzmittel und/oder ein Lösungsmittel umfasst.

2. Verfahren nach dem vorhergehenden Anspruch, wobei das Beaufschlagen der Oberfläche (12) des Formteils (10) mit dem Oberflächenbehandlungsmittel ein Bedampfen der Oberfläche mit dem Oberflächenbehandlungsmittel, ein Besprühen der Oberfläche mit dem Oberflächenbehandlungsmittel, ein Eintauchen des Formteils in ein flüssiges Oberflächenbehandlungsmittel, und Kombinationen hiervon umfasst.

3. Verfahren nach einem der vorhergehenden Ansprüche, wobei während der Beaufschlagung mit dem Oberflächenbehandlungsmittel das Formteil (10) in dem Behandlungsraum relativ zu dem Behandlungsraum bewegt, insbesondere gedreht wird.

4. Verfahren nach einem der vorhergehenden Ansprüche, wobei nach dem Beaufschlagen der Oberfläche (12) des Formteils (10) mit dem Oberflächenbehandlungsmittel das Formteil einer Reinigung unterzogen wird, um an der Oberfläche (12) des Formteils (10) vorhandenes überschüssiges Oberflächenbehandlungsmittel zu entfernen, wobei das Formteil (10) zum Reinigen erhitzt wird, um das überschüssige Oberflächenbehandlungsmittel von der Oberfläche (12) des Formteils (10) zu lösen und/oder wobei das Formteil (10) vor und/oder während der Beaufschlagung der Oberfläche (12) mit dem Oberflächenbehandlungsmittel erwärmt wird, um die Behandlungsdauer der Oberflächenbehandlung zu reduzieren.

5. Verfahren nach einem der vorhergehenden Ansprüche, wobei das Haltemittel (15) eine Gitterbox (15a) umfasst, wobei das Formteil (10) innerhalb der Gitterbox angeordnet wird, derart, dass zumindest ein Ende des Haltestiftes (15b) an der Oberfläche (12) des Formteils (10) und zumindest ein anderes Ende des Haltestiftes (15b) an der Wandung der Gitterbox befestigt ist, wobei die Oberfläche des Formteils die Gitterbox nicht berührt wobei das Haltemittel (15) zumindest einen mindestens zwei Enden aufweisenden Abstandshalter (15d) umfasst, wobei mehrere Formteile beabstandet zueinander und sich nicht berührend angeordnet werden, wobei die mehreren Formteile über den zumindest einen Abstandshalter (15d) miteinander verbunden werden, und wobei die mehreren Formteile innerhalb der Gitterbox (15a) angeordnet sind.

6. Verfahren nach einem der vorhergehenden Ansprüche, wobei das Haltemittel (15) und das Formteil (10) einteilig ausgestaltet sind und/oder in dem 3D-Druckverfahren einteilig hergestellt werden.

7. Verfahren nach einem der vorhergehenden Ansprüche, wobei zwischen der Oberfläche (12) des Formteils (10) und dem Haltemittel (15) eine Sollbruchstelle (20) ausgebildet wird, an der das Haltemittel nach dem Beaufschlagen der Oberfläche des Formteils mit dem Ätzmittel von dem Formteil lösbar ist.

8. Verfahren nach einem der vorhergehenden Ansprüche, wobei
- das zumindest eine Formteil (10) ein erstes Material oder eine erste Materialzusammensetzung und das zumindest eine Haltemittel (15) ein zweites Material oder eine zweite Materialzusammensetzung aufweisen,
- zum Ablösen der Haltemittel (15) von der Oberfläche (12) des Formteils (10) zumindest die Haltemittel mit einem vorzugsweisen flüssigen Trennmittel beaufschlagt werden,
wobei das Trennmittel so gewählt wird, dass sich die Haltemittel innerhalb einer vorbestimmten Zeit zumindest teilweise vollständig auflösen, ohne dabei das Formteil oder die Oberfläche des Formteils zu verändern, insbesondere zu beschädigen.

9. Verfahren nach dem vorhergehenden Anspruch, wobei, wenn das Formteil (10) in einem pulverbasierten Fertigungs- bzw. Druckverfahren hergestellt wird, das erste Material oder die erste Materialzusammensetzung ein erstes Klebemittel und das zweite Material oder die zweite Materialzusammensetzung ein zweites Klebemittel aufweisen, wobei das erste Klebemittel gegenüber dem Trennmittel beständig ist und das zweite Klebemittel gegenüber dem Trennmittel nicht beständig ist.

10. Verfahren nach Anspruch 1, wobei das Formteil zusammen mit dem zumindest einen von der Oberfläche (12) des Formteils (10) abstehenden Haltemittel (15) hergestellt wird, wobei das Formteil und das zumindest eine Haltemittel einteilig ausgestaltet ist, wobei das Haltemittel (15) als zumindest den mindestens zwei Enden aufweisenden Haltestift (15b) hergestellt wird, wobei der zumindest eine Haltestift ebenfalls in dem 3D-Druckverfahren hergestellt wird, und wobei der Haltestift (15b) so ausgestaltet wird, dass das Formteil (10) mit ihm in den Behandlungsraum der Ätzvorrichtung gehängt werden kann, ohne dass das Formteil (10) die Innenwandung des Behandlungsraumes berührt.

11. Verfahren nach dem vorhergehenden Anspruch, wobei das Haltemittel als Abstandshalter (15d) hergestellt wird, wobei ein Abstandshalter zumindest zwei Formteile (10) beabstandet zueinander miteinander verbindet, wobei der Abstandshalter ebenfalls in dem 3D-Druckverfahren hergestellt wird, sodass der Abstandshalter und die Formteile einteilig ausgestaltet sind.

12. Verfahren nach einem der beiden vorhergehenden Ansprüche, wobei das Haltemittel als Gitterbox (15a) mit dem zumindest einen Haltestift (15b) hergestellt wird, wobei das Formteil (10) innerhalb der Gitterbox hergestellt wird und wobei das Formteil mit dem zumindest einen Haltestift (15b) an der Gitterbox befestigt ist, sodass die Gitterbox, der zumindest eine Haltestift und das Formteil einteilig ausgestaltet sind.

13. Verfahren nach einem der drei vorhergehenden Ansprüche, wobei zur Herstellung des Formteils (10) ein erstes Material oder eine erste Materialzusammensetzung und zum Herstellen des Haltemittels (15) ein zweites Material oder eine zweite Materialzusammensetzung verwendet werden, wobei das erste Material oder die erste Materialzusammensetzung und das zweite Material oder die zweite Materialzusammensetzung so gewählt werden, dass mit einem vorzugsweise flüssigen Trennmittel die Haltemittel innerhalb einer vorbestimmten Zeit vollständig auflösbar sind, ohne dabei das Formteil oder die Oberfläche des Formteils zu verändern, insbesondere zu beschädigen.

## Claims

1. Method for treating a surface of at least one molded part (10) produced in a 3D printing process, in particular produced in a powder-based manufacturing or printing process, using a surface treatment agent in order to smooth the surface of the molded part, wherein
- at least one holding means (15) is arranged on the surface (12) of the molded part (10), which holding means protrudes from the surface,
- the molded part having the at least one holding means (15) is introduced into a treatment chamber, which has an inner wall formed by a bottom and side walls, of an etching device in such a way that the surface (12) of the molded part (10) does not come into contact with the inner wall,
- the surface (12) of the molded part (10) is applied with surface treatment agent after said part has been introduced into the treatment chamber for a predetermined period of time, and
- after the surface (12) of the molded part has been applied with the surface treatment agent, the molded part (10) is removed from the treatment chamber and the holding means (15) is detached from the surface of the molded part,
wherein
- the holding means (15) comprises at least one holding pin (15b) having at least two ends, wherein at least one end of the holding pin is fastened to the surface (12) of the molded part (10),
- the holding pin (15b) is designed so that the molded part (10) can be hung with the pin in the treatment chamber of the etching device without the molded part (10) touching the inner wall of the treatment chamber, and
- the surface treatment agent comprises an etchant and/or a solvent.

2. Method according to the preceding claim, wherein applying the surface treatment agent to the surface (12) of the molded part (10) includes vaporizing the surface with the surface treatment agent, spraying the surface with the surface treatment agent, dipping the molded part in a liquid surface treatment agent, and combinations thereof.

3. Method according to either of the preceding claims, wherein during the application of the surface treatment agent, the molded part (10) is moved, in particular rotated, in the treatment chamber relative to the treatment chamber.

4. Method according to any of the preceding claims, wherein after the surface (12) of the molded part (10) has been applied with the surface treatment agent, the molded part is subjected to cleaning in order to remove excess surface treatment agent present on the surface (12) of the molded part (10), wherein the molded part (10) is heated for cleaning in order to remove the excess surface treatment agent from the surface (12) of the molded part (10) and/or wherein the molded part (10) is heated before and/or during the application of the surface treatment agent to the surface (12) in order to reduce the treatment duration of the surface treatment.

5. Method according to any of the preceding claims, wherein the holding means (15) comprises a lattice box (15a), wherein the molded part (10) is arranged within the lattice box in such a way that at least one end of the holding pin (15b) is fastened to the surface (12) of the molded part (10) and at least one other end of the holding pin (15b) is fastened to the wall of the lattice box, wherein the surface of the molded part does not touch the lattice box, wherein the holding means (15) comprises at least one spacer (15d) having at least two ends, wherein a plurality of molded parts are spaced apart from one another and do not touch one another, wherein the plurality of molded parts are connected to one another via the at least one spacer (15d), and wherein the plurality of molded parts are arranged within the lattice box (15a).

6. Method according to any of the preceding claims, wherein the holding means (15) and the molded part (10) are designed in one piece and/or are produced in one piece in the 3D printing process.

7. Method according to any of the preceding claims, wherein a predetermined breaking point (20) is formed between the surface (12) of the molded part (10) and the holding means (15), at which point the holding means can be detached from the molded part after the surface of the molded part has been applied with etchant.

8. Method according to any of the preceding claims, wherein
- the at least one molded part (10) has a first material or a first material composition and the at least one holding means (15) has a second material or a second material composition,
- in order to remove the holding means (15) from the surface (12) of the molded part (10), at least the holding means is applied with a preferably liquid release agent,
wherein the release agent is selected so that the holding means dissolves at least partially completely within a predetermined time without changing, in particular damaging, the molded part or the surface of the molded part.

9. Method according to the preceding claim, wherein, if the molded part (10) is produced in a powder-based manufacturing or printing process, the first material or the first material composition has a first adhesive and the second material or the second material composition has a second adhesive, wherein the first adhesive is resistant to the release agent and the second adhesive is not resistant to the release agent.

10. Method according to claim 1, wherein the molded part is produced together with the at least one holding means (15) protruding from the surface (12) of the molded part (10), wherein the molded part and the at least one holding means are designed in one piece, wherein the holding means (15) is produced as at least the holding pin (15b) having at least two ends, wherein the at least one holding pin is also produced in the 3D printing process, and wherein the holding pin (15b) is designed so that the molded part (10) can be hung with the pin in the treatment chamber, without the molded part (10) touching the inner wall of the treatment chamber.

11. Method according to the preceding claim, wherein the holding means is produced as a spacer (15d), wherein a spacer connects at least two molded parts (10) at a distance from one another, wherein the spacer is also produced in the 3D printing process, so that the spacer and the molded parts are designed in one piece.

12. Method according to either of the two preceding claims, wherein the holding means is produced as a lattice box (15a) with the at least one holding pin (15b), wherein the molded part (10) is produced within the lattice box and wherein the molded part with the at least one holding pin (15b) is fastened to the lattice box, so that the lattice box, the at least one holding pin and the molded part are designed in one piece.

13. Method according to any of the three preceding claims, wherein a first material or a first material composition is used to produce the molded part (10) and a second material or a second material composition is used to produce the holding means (15), wherein the first material or the first material composition and the second material or the second material composition can be selected so that a preferably liquid release agent can be used to completely dissolve the holding means within a predetermined time without changing, in particular damaging, the molded part or the surface of the molded part.

## Revendications

1. Procédé de traitement d'une surface d'au moins une pièce moulée (10), réalisée dans un procédé d'impression 3D, en particulier d'un procédé de fabrication ou d'impression à base de poudre, avec un agent de traitement de surface, en vue de lisser la surface de la pièce moulée,
- au moins un agent de maintien (15) faisant saillie depuis la surface étant disposé sur la surface (12) de la pièce moulée (10),
- la pièce moulée comportant l'au moins un agent de maintien (15) étant introduite dans un espace de traitement, lequel présente une paroi intérieure formée par un fond et par des parois latérales, d'un dispositif de décapage de telle sorte que la surface (12) de la pièce moulée (10) n'entre pas en contact avec la paroi intérieure,
- la surface (12) de la pièce moulée (10) étant exposée à l'agent de traitement de surface pendant une durée prédéterminée après son introduction dans l'espace de traitement, et
- après l'exposition de la surface (12) de la pièce moulée à l'agent de traitement de surface, la pièce moulée (10) étant retirée de l'espace de traitement et les agents de maintien (15) étant détachés de la surface de la pièce moulée,
dans lequel
- l'agent de maintien (15) comprend au moins une tige de maintien (15b) présentant au moins deux extrémités, au moins une extrémité de la tige de maintien étant fixée à la surface (12) de la pièce moulée (10),
- la tige de maintien (15b) est conçue de telle sorte que la pièce moulée (10) peut être accrochée avec ladite tige de maintien dans l'espace de traitement du dispositif de décapage sans que la pièce moulée (10) ne touche la paroi intérieure de l'espace de traitement, et
- l'agent de traitement de surface comprend un agent de décapage et/ou un solvant.

2. Procédé selon la revendication précédente, dans lequel l'exposition de la surface (12) de la pièce moulée (10) à l'agent de traitement de surface comprend la vaporisation de la surface avec l'agent de traitement de surface, la pulvérisation de la surface avec l'agent de traitement de surface, le trempage de la pièce moulée dans un agent de traitement de surface liquide, et leurs combinaisons.

3. Procédé selon l'une des revendications précédentes, dans lequel, lors de l'exposition à l'agent de traitement de surface, la pièce moulée (10) est déplacée, en particulier tournée, dans l'espace de traitement par rapport à l'espace de traitement.

4. Procédé selon l'une des revendications précédentes, dans lequel, après l'exposition de la surface (12) de la pièce moulée (10) à l'agent de traitement de surface, la pièce moulée est soumise à un nettoyage afin d'éliminer l'excès d'agent de traitement de surface présent sur la surface (12) de la pièce moulée (10), la pièce moulée (10) étant chauffée pour le nettoyage afin de détacher l'excès d'agent de traitement de surface de la surface (12) de la pièce moulée (10) et/ou la pièce moulée (10) étant chauffée avant et/ou pendant l'exposition de la surface (12) à l'agent de traitement de surface afin de réduire le temps de traitement du traitement de surface.

5. Procédé selon l'une des revendications précédentes, dans lequel l'agent de maintien (15) comprend un caisson en treillis (15a), la pièce moulée (10) étant disposée à l'intérieur du caisson en treillis de telle manière qu'au moins une extrémité de la tige de maintien (15b) est fixée sur la surface (12) de la pièce moulée (10) et au moins une autre extrémité de la tige de maintien (15b) est fixée sur la paroi du caisson en treillis, la surface de la pièce moulée ne touchant pas le caisson en treillis, l'agent de maintien (15) comprenant au moins un espaceur (15d) présentant au moins deux extrémités, plusieurs pièces moulées étant disposées de manière espacée les unes des autres et ne se touchant pas, les plusieurs pièces moulées étant reliées les unes aux autres par l'intermédiaire de l'au moins un espaceur (15d), et les plusieurs pièces moulées étant disposées à l'intérieur du caisson en treillis (15a).

6. Procédé selon l'une des revendications précédentes, dans lequel l'agent de maintien (15) et la pièce moulée (10) sont conçus d'une seule pièce et/ou sont réalisés d'une seule pièce dans le procédé d'impression 3D.

7. Procédé selon l'une des revendications précédentes, dans lequel un point de rupture cible (20) est conçu entre la surface (12) de la pièce moulée (10) et l'agent de maintien (15), au niveau duquel l'agent de maintien peut être détaché de la pièce moulée après l'exposition de la surface de la pièce moulée à l'agent de décapage.

8. Procédé selon l'une des revendications précédentes, dans lequel
- l'au moins une pièce moulée (10) présente un premier matériau ou une première composition de matériau et l'au moins un agent de maintien (15) présente un second matériau ou une seconde composition de matériau,
- au moins les agents de maintien sont exposés à un agent de séparation de préférence liquide afin de détacher les agents de maintien (15) de la surface (12) de la pièce moulée (10),
dans lequel l'agent de séparation est choisi de telle sorte que les agents de maintien se dissolvent au moins partiellement complètement dans un temps prédéterminé sans modifier, en particulier sans endommager, la pièce moulée ou la surface de la pièce moulée.

9. Procédé selon la revendication précédente, dans lequel, si la pièce moulée (10) est réalisée dans un procédé de fabrication ou d'impression à base de poudre, le premier matériau ou la première composition de matériau présente un premier adhésif et le second matériau ou la seconde composition de matériau présente un second adhésif, le premier adhésif étant résistant à l'agent de séparation et le second adhésif n'étant pas résistant à l'agent de séparation.

10. Procédé selon la revendication 1, dans lequel la pièce moulée est réalisée conjointement avec l'au moins un agent de maintien (15) faisant saillie depuis la surface (12) de la pièce moulée (10), la pièce moulée et l'au moins un agent de maintien étant conçus d'une seule pièce, l'agent de maintien (15) étant réalisé en tant qu'au moins la tige de maintien (15b) présentant au moins deux extrémités, l'au moins une tige de maintien étant également réalisée dans le procédé d'impression 3D, et la tige de maintien (15b) étant conçue de telle manière que la pièce moulée (10) peut être accrochée avec ladite tige de maintien dans l'espace de traitement du dispositif de décapage sans que la pièce moulée (10) ne touche la paroi intérieure de l'espace de traitement.

11. Procédé selon la revendication précédente, dans lequel l'agent de maintien est réalisé sous forme d'espaceur (15d), un espaceur reliant au moins deux pièces moulées (10) l'une à l'autre de manière espacée, l'espaceur étant également réalisé dans le procédé d'impression 3D, de sorte que l'espaceur et les pièces moulées sont conçus d'une seule pièce.

12. Procédé selon l'une des deux revendications précédentes, dans lequel l'agent de maintien est réalisé sous la forme d'un caisson en treillis (15a) avec l'au moins une tige de maintien (15b), la pièce moulée (10) étant réalisée à l'intérieur du caisson en treillis et la pièce moulée étant fixée au caisson en treillis avec l'au moins une tige de maintien (15b) de sorte que le caisson en treillis, l'au moins une tige de maintien et la pièce moulée sont conçus d'une seule pièce.

13. Procédé selon l'une des trois revendications précédentes, dans lequel un premier matériau ou une première composition de matériau est utilisé pour réaliser la pièce moulée (10) et un second matériau ou une seconde composition de matériau est utilisé pour réaliser l'agent de maintien (15), le premier matériau ou la première composition de matériau et le second matériau ou la seconde composition de matériau étant choisis de manière à ce que les agents de maintien peuvent être complètement dissous avec un agent de séparation de préférence liquide dans un temps prédéterminé sans modifier, en particulier sans endommager, la pièce moulée ou la surface de la pièce moulée.
